# EUROPEAN PATENT APPLICATION

(11) **EP 3 165 548 A1**
(43) Date of publication of application: **10.05.2017**
(21) Application number: 15192993.2
(22) Date of filing: 04.11.2015
(51) Int. Cl.: C08G 18/71, C08G 18/77, C08G 63/91, C09D 167/00, C09D 175/04, C09D 175/06, C09D 183/04, C09D 183/10, C09D 201/10, C08G 18/42, C08G 77/458, C08L 75/04

(54) **COMPOSITION FOR COATING THE SURFACE OF A TRANSPARENT MATERIAL**

(71) Applicant: WEILBURGER Coatings ITALIA S.p.A., 24039 Sotto il Monte (IT)
(72) Inventor: Piccinini, Francesca Maria, 24033 Calusco d'Adda (Bg) (IT); Bellocchi, Lorenzo, 20900 Monza (Mi) (IT)
(74) Representative: WSL Patentanwälte Partnerschaft mbB

(57) **Abstract**

In order to provide means for forming a colored coating on the surface of a transparent substrate, wherein said coating provides high opacity to visible light and has a higher crack-free dry film thickness than prior art coatings, there is suggested a coating composition comprising a coloring component and a coating composition base, wherein the coating composition base comprises 10-30 wt.-% of a functionalized polyester polyol resin being functionalized via urethane bonds with alkoxy silane groups, 30-75 wt.-% organoalkoxysilane of the general formula RₙSi(OR')₄₋ₙ, wherein R and R' are independently from each other selected from a methyl or ethyl group, and 1 to 10 wt.-% organic or inorganic acid, and 5-50 wt.-% water, optionally in mixture with at least one organic solvent.

## Description

### Introduction

The present invention is directed to a method for forming a colored coating on the surface of a transparent substrate, wherein said method comprises applying a colored coating composition onto said surface of said transparent substrate, wherein said coating composition comprises a coloring component and a coating composition base, wherein said coloring component consists of at least one organic/inorganic colorant, pigment or combinations thereof. Further, the present invention is directed to a substrate coated with a coating prepared according to the aforementioned method.

### Technological Background

In the field of cosmetic, the choice of glass for the fabrication of containers for perfumes and fragrances is particularly common, due to its characteristics of transparency, strength/robustness and its mechanical and chemical resistance. Furthermore, the appearance qualities of the container are extremely important and decorative effects are usually sought after in order to make the container attractive from an aesthetic point of view. The coloration of glass by melting presents some problems connected both to achievable colours and process costs. Application by spraying of colored laquers, on the other hand, is highly flexible and provide several advantages in terms of costs, reproducibility and processing temperatures, so it is generally a favourable choice.

Normally application of coatings onto the external surface of the container does not entail specific technical problems. However, to enhance the aesthetic value, the decoration of the inner surface of a transparent container with colored coatings which are visible through the walls of said container has been proposed. This decoration approach brings along severe technical hurdles due to the aggressiveness of cosmetic compositions which are filled into the container. In fact the cosmetic composition is usually an alcoholic liquid and the decoration itself must withstand prolonged immersion in said fluid without being detached, impaired and/or leaching substances and colorants into it, which might lead to an unacceptable discoloration of the liquid solution and/or the decorative coating itself.

### Prior Art

Many solutions have been proposed to overcome the aforementioned drawbacks, one of them involves the use of an internal plastic pocket which protects both the liquid composition and the coating, avoiding any contact between the inner decoration and the cosmetic product. Other, even more promising alternatives, suggest to make use of sol-gel techniques, which enable the preparation of vitreous thin-film materials with characteristics close to the ones of glass.

EP 2 135 523 B1 describes a method for decorating a glass or plastic transparent or translucent bottle, for the cosmetic field, the decoration of which is made inside the bottle, and which consists in making at least one coating onto the inner surface of the bottle, by spraying a liquid mist inside the bottle, wherein the sprayed liquid is a silica based polymer made by the sol-gel method, and wherein said silica based polymer forms a barrier protecting layer for protecting the cosmetic product from any possible migration detrimental to the quality thereof, as for example detrimental to the fragrance and/or colour thereof as well as the preservation thereof.

EP 2 320 765 B1 and US 8 852 699 B2 describe similar methods according to which containers are provided that have on their inner surface a mineral-oxide-based coating obtained by sol-gel deposition, wherein the precursor of said sol-gel deposition is at least one silicon alkoxide.

Sol-gel is a very well known technology which allows the preparation of inorganic or organic/inorganic hybrid networks starting from liquid precursors, like silica alkoxides (or metal alkoxides such as Al or Ti) which, through hydrolysis and condensation reactions, evolve into the final desired network (cf. Schottner, G., Kron, J., Deichmann, K. J. Verre, 2000, 6, 5). Through sol-gel processes the problem of affinity of the coating with glass could be solved, since sol-gel materials have glassy characteristics. Finally, sol-gel type coatings, compared to traditional organic systems, yield higher abrasion resistance and perfect adhesion (cf. Schottner, G. et al. Industrial application of hybrid sol-gel coatings for the decoration of crystal glassware, Journal of Sol-gel Science and Technology, 1998, 13, 183-187).

Common sol-gel precursor alkoxides, are compounds of formula M(OR)ₙ, where M is silicon or metal and OR is the organic group undergoing to the hydrolysis and condensation reactions. The organic groups OR bonded to M could be either identical or different. "n" is the valence of M. The precurosor, as hydrolysis occurs, evolves in hydroxylated species, M(OH)ₙ, which are responsible for the formation of the oxide network through condensation reaction of hydroxyl groups. The sol-gel coating, once applied, responds favourably to a curing stage at temperatures in the range of 50°C-200°C. The typical sol-gel reactions do not require the use of high temperature since the hydrolysis and condensation occur at room temperature.

### Problems of Prior Art solutions

Traditional sol-gel coatings do not provide the desired crack-free dry film thickness of the coating. Particularly, prior art sol-gel coatings show serious cracking problems when applied at high thickness due to their brittle nature.

### Object of the present invention

The object of the present invention is to overcome the aforementioned difficulties, i.e. to suggest a method for decorating a transparent or translucent cosmetic container by applying a colored coating inside the bottle, wherein said coating has a higher crack-free dry film thickness than prior art coatings and provices greater opacity to visible light across the coated bottle wall. Of course said coating must be suitable for a prolonged contact with a liquid alcoholic composition. Further, the coating must not undergo deterioration or degradation or dissolution after prolonged immersion in the cosmetic product. In other words, the provided coating shall be attractive from the aesthetic point of view, i.e. without any visible defects, aesthetically stable and chemically and mechanically durable.

### Description of the invention

In order to overcome the aforementioned difficulties the present invention provides a method for forming a colored coating on the surface of a transparent substrate, wherein said method comprises applying a colored coating composition onto said surface of said transparent substrate, wherein said coating composition comprises a coloring component and a coating composition base, wherein said coloring component consists of at least one organic/inorganic colorant, pigment or combinations thereof, and wherein said coating composition base comprises the following essential components:

| | |
|---|---|
| 10 to 30 wt.-% | functionalized polyester polyol resin having a molecular weight in the range of from 3000 to 4000 Dalton and being functionalized via urethane bonds with alkoxy silane groups of the general formula -(CH₂)ₓ-Si(OR)₃, wherein x is an integer in the range of from 1 to 10, and wherein R is (substituted or unsubstituted, linear or branched) alkyl of C₁ through C₈, |
| 30 to 75 wt.-% | organoalkoxysilane of the general formula RₙSi(OR')₄₋ₙ, wherein n is either 0 or 1, and wherein R and R' are independently from each other selected from a methyl or ethyl group, |
| 1 to 10 wt.-% | organic or inorganic acid, and |
| 5 to 50 wt.-% | water, optionally in mixture with at least one organic solvent. |

The above mentioned components of the coating composition base are the essential components, that are strictly required to achieve the good results obtained by the coating in accordance with the present invention. However, of course there may be other, so called secondary ingredients in the coating composition, too, such as additives, functional fillers, etc.. Examples for such secondary ingredients are given in detail further below.

The coating composition base described in the present invention results in an organic/inorganic hybrid coating, obtained by sol-gel process. The organic polymeric compound (polyester polyol resin) is appropriately functionalized with alkoxy groups in order to be compatible with the alkylated inorganic polymeric silane compound. The resulting coating comprises an inorganic matrix modified with polymeric chains covalently bonded to it, in order to deliver enhanced flexibility.

The coating resulting from applying the inventive coating composition base shows properties and characteristics close, to a certain extent, to the ones of glass and is able to withstand the contact with an alcoholic solution for a long period of time without incurring in migration or deterioration, thanks to its superior chemical stability and resistance.

If compared with the traditional brittle sol-gel inorganic coatings the present invention allows the deposition of a relatively thicker layer without running into risk of cracking (caused by internal stresses) or loss of adhesion.

The present invention particulary provides a method for providing an improved coating on the inner surface of a transparent container, wherein said container is intended to receive a cosmetic composition in the form of an alcoholic fluid, such as a perfume or a fragrance. The inventive coatings deposited on the inner surface of the container are suitable to endure immersion in a cosmetic product, especially a fluid, having a hydro-alcoholic composition, such as a perfume.

The term *"substrate",* as used herein, denotes any object, on the surface of which the inventive coating composition is to be applied to. The term *"coating",* as used herein, denotes a layer formed by applying and distributing the inventive coating composition on the surface of the substrate. The term *"container',* as used herein, denotes any hollow item, such as bottle, vial, jar, which is suitable for receiving a cosmetic composition and, more precisely, a liquid alcoholic composition, like a perfume. The term *"inner surface"* relates to the interior surface of the container which bears the coating being in direct contact with the cosmetic product.

### Specific embodiments of the invention

It is not necessary that the alkoxy groups of the functionalized polyester polyol resin and the ones of the organoalkoxysilane are the same. In some embodiments ethoxy groups (-OCH₂CH₃) of the functionalized polyester polyol resin are combined with methoxy groups (-OCH₃) of the organoalkoxysilane. Furthermore, R and R' groups of the organoalkoxysilane may or may not be the same.

The content of organic or inorganic acid can be formed by any organic or inorganic acid or mixtures of the same. In some embodiments formic acid is an example for a preferred acid. However, in some other embodiments of the invention the acid is preferably selected from acetic acid or chloric acid.

The coating composition base comprises 5 to 50 wt.-% water, optionally in mixture with at least one organic solvent. Accordingly, in some embodiments there is 5 to 50 wt.-% water, whereas in others there is 5 to 50 wt.-% of a mixture of water and at least one organic solvent.

In specific embodiments of the invention the content of water is in the range of from 5 to 30 wt.-%, and in some embodiments of the invention the content of water in the coating composition base is in the range of from 5 to 20 wt.-%.

In specific embodiments of the invention the content of organic solvent in the coating composition base is in the range of from 5 to 30 wt.-%, and in some embodiments of the invention the content of organic solvent in the coating composition base is in the range of from 5 to 20 wt.-%.

In specific embodiments of the invention the at least one organic solvent of the coating composition base is selected from methylethylketone, butylglycol, and mixtures thereof. The presence of water miscible butylglycol is advantageous because it improves the solubility of the resin in the presence of water (compatibilization between the water-soluble (hydrophilic) and the solvent-soluble (hydrophobic) components).

In specific embodiments of the invention the coating composition consists of

| | |
|---|---|
| 50 to 90 wt.-% | coating composition base |
| 8 to 40 wt.-% | coloring component |
| 1 to 10 wt.-% | secondary ingredients. |

Organic pigments may be either in form of powder or dispersions (pre-dispersion either in water or in solvent) or pastes. Titanium dioxide, for instance, is added in form of paste. Lamellar pigments are introduced as micronized powders.

In the following table there are indicated some specific coloring agent examples. However, it is to be understood that the present invention is of course not limited to this little choice of exemplary coloring agents.

| **PIGMENT COLOR** | **CHEMICAL NATURE** |
|---|---|
| WHITE | TITANIUM DIOXIDE |
| YELLOW | COMPLEX INORGANIC COLOURED PIGMENT BASED ON TITANIUM OXIDE; IN THE RUTILE LATTICE |
| | TITANIUM IONS ARE PARTIALLY REPLACED BY CHROMIUM (III) AND ANTIMONY (V) IONS. |
| | (TI, CR, SB) O₂ |
| RED | PERYLENE |
| MAGENTA | AMMONIUM PIROPHOSPHATE MANGANESE |
| BLUE | SPINEL |
| BLACK | CARBON BLACK |
| BLACK | SPINEL |

In specific embodiments of the invention the coating composition comprises as a secondary ingredient an anti-cratering agent, a wetting agent, a levelling agent, a crack-bridging filler, a rheology modifying agent, an anti-settling agent and a dispersing agent or mixtures thereof.

Generally wetting/anticratering/leveling agents are silicone containing surface additives and surfactants (for instance polyether modified siloxanes). Examples for suitable rheology modifying agents and anti-settling additives are solutions of urea modified polyurethane, dispersions of amide waxes, and also dispersions of acicular fumed silica can be used for this purpose, possibly bringing along additional crack-bridging features.

Even greater thickness can be achieved by incorporating in the composition platelet shaped, inherently flexible, functional fillers, such as phyllosilicates, that are delivering additional crack-bridging features to the coating film. Specific examples for such crack-bridging fillers are mica, talc, glass flakes.

In specific embodiments of the invention applying the coating composition is effected by spraying the coating composition onto the surface of the transparent substrate.

In specific embodiments of the invention prior to applying the coating composition onto the surface of the transparent substrate, said transparent substrate is preheated at a temperature in the range of from 60° to 100° C. The pre-heating step of the substrate is not mandatory yet preferred in order to enhance the adhesion of the material to the substrate and to avoid sagging thanks to a forced evaporation of some of the solvent part of the formulation.

In specific embodiments of the invention after applying the coating composition onto the surface of the transparent substrate, there is a desolvatation step at a temperature in the range of from 70° to 90° C for 3 to 10 minutes. In some embodiments this is done while spinning the substrate. In some embodiments of the invention after applying the coating composition onto the surface of the transparent substrate, there is a curing step at a temperature in the range of from 150° to 250° C for 30 to 90 minutes. In some embodiments this is done while spinning the substrate.

The reaction time (maturing time) is one hour under stirring at 1000-2000 rpm. After this maturing time, the typical sol-gel reactions (hydrolysis and condensation) have progressed to at the right degree of conversion and the sol have an appropriate viscosity value to be applied by spray application (12" DIN 4) being the sol still in a liquid form and the gel not yet formed.

For the purpose of original disclosure it is to be noted that any features which may be gathered by a skilled person from the present description and the claims, even if only described in connection with particular further features, may be combined individually as well as in arbitrary combinations with any other of the features or groups of features disclosed herein, unless this is explicitly excluded or technical conditions would render such combinations impossible or senseless. The comprehensive, explicit discussion of any combinations of features which might be thought of is dispensed with just for the sake of brevity and legibility of the description and claims.

With respect to the following examples any skilled person will understand the same as not being intended to restrict the invention to any of the particular embodiments mentioned in the examples. Instead the skilled person understands, that the embodiments of the following examples shall simply reflect some specific embodiments of the invention. In other words the skilled person knows that of course there are numerous other embodiments of the invention, all of which being within the scope of the invention as far as said embodiments show all features or combinations of features required to perform within the scope of the invention according to the claims. The comprehensive, explicit presentation of all embodiments being within the scope of the invention is dispensed with just for the sake of brevity and legibility of the description and claims.

### Examples:

The following example is referring to one specific embodiment of the invention, which is a pale pink sol-gel coating. The overall coating composition (coating composition base + coloring component + secondary ingredients) is obtained by mixing three components (A, B, and C), wherein each of said components (A, B, and C) comprises one (or more) of the essential components as indicated in the claims and additionally one (or more) secondary ingredients.

### 1) Preparation of the three components:

### Component A:

**Table 1: Detailed composition of Component A**

| **Substance** | **g** |
|---|---|
| Functionalized polyester polyol | 8,2 |
| TiO₂ paste | 75,0 |
| Red paste | 0,6 |
| Yellow paste | 0,6 |
| Lamellar phyllosilicate | 8,0 |
| Anti-settling preparation | 7,6 |
| Total | 100,0 |

All the ingredients of component A are added under stirring. The ingredients and the procedure to prepare the anti-settling preparation **(table 5)** and the three pastes are reported in the following **(tables 6-7-8).**

### Component B:

**Table 2: detailed composition of Component B**

| **Substance** | **g** |
|---|---|
| Methyltrimethoxysilane | 98,4 |
| wetting/anticratering/levelling additive A | 0,8 |
| wetting/anticratering/levelling additive B | 0,8 |
| Total | 100,0 |

### Component C:

**Table 3: detailed composition of Component C (acid catalyst)**

| **Substance** | **g** |
|---|---|
| Demineralized water | 78,1 |
| HCOOH | 21,9 |
| Total | 100,0 |

In the following table **(Table 4)** the specifications relevant to the polyester alkoxysilane modified resin are listed:

**Table 4: specifications of the polyester alkoxysilane modified resin**

| | |
|---|---|
| **Solid content** | 60% |
| **Solvents** | Methylethylketone:Butylglycol (40:60) |
| **Si(OR) on dry content** | 1,36 eq/kg |

**Table 5: detailed composition of the anti-settling preparation in component A**

| **Substance** | **g** |
|---|---|
| Functionalized polyester polyol | 34,0 |
| Butylglycol | 49,0 |
| anti-settling agent | 17,0 |

**Table 6: detailed composition of the TiO₂ paste**

| **Substance** | **g** |
|---|---|
| Functionalized polyester polyol | 8,8 |
| Butylglycol | 30,2 |
| dispersing agent | 3 |
| white pigment | 58,0 |
| Total | 100,0 |

**Table 7: detailed composition of the red paste**

| **Substance** | **g** |
|---|---|
| Functionalized polyester polyol | 17,4 |
| Butylglycol | 60,3 |
| dispersing agent | 3 |
| red pigment | 19,3 |
| Total | 100,0 |

**Table 8: detailed composition of the yellow paste**

| **Substance** | **g** |
|---|---|
| Functionalized polyester polyol | 11,3 |
| Butylglycol | 20,2 |
| dispersing agent | 4 |
| yellow pigment | 64,5 |
| Total | 100,0 |

The three pastes are obtained by milling the three respective pigments in a solution of polyester resin and butylglycol, using a dispersing agent to help the incorporation/dispersion/stabilization of the pigment into the vehicle/carrier.

### 2) Mixing of the three components:

The three components are added in the following mixing ratio: A:B:C = 68,7:25,4:5,9.

Component B is added to component A under mechanical stirring and then component C is added into the A+B mixture. The resulting solution is kept under mechanical stirring for one hour at 1000-2000 rpm prior to the application (maturing time). Rheological modifier are eventually added at the end of the maturing time (optionally, if required to improve application ease).

### 3) Application:

In order to avoid sagging, the bottles are pre-heated at a temperature ranging from 60°C to 120°C prior to application.

### 4) Desolvatation and annealing (curing)

Desolvatation is performed at 80°C. Curing time is 1 hour at 200°C.

## Claims

1. Method for forming a colored coating on the surface of a transparent substrate, wherein said method comprises applying a colored coating composition onto said surface of said transparent substrate, wherein said coating composition comprises a coloring component and a coating composition base, wherein said coloring component consists of at least one organic/inorganic colorant, pigment or combinations thereof, and wherein said coating composition base comprises the following components:
| | |
|---|---|
| 10-30 wt.-% | functionalized polyester polyol resin having a molecular weight in the range of from 3000 to 4000 Dalton and being functionalized via urethane bonds with alkoxy silane groups of the general formula -(CH₂)ₓ-Si(OR)₃, wherein x is an integer in the range of from 1 to 10, and wherein R is (substituted or unsubstituted, linear or branched) alkyl of C₁ through C₈, |
| 30-75 wt.-% | organoalkoxysilane of the general formula RₙSi(OR')₄₋ₙ, wherein n is either 0 or 1, and wherein R and R' are independently from each other selected from a methyl or ethyl group, and |
| 1 to 10 wt.-% | organic or inorganic acid, and |
| 5-50 wt.-% | water, optionally in mixture with at least one organic solvent. |

2. Method according to claim 1, wherein the organic or inorganic acid is selected from formic acid, acetic acid or chloric acid.

3. Method according to claim 1 or 2, wherein the organic solvent is selected from methylethylketone, butylglycol, and mixtures thereof.

4. Method according to one of the preceding claims, wherein the content of water in the coating composition base is in the range of from 5 to 30 wt.-% and/or wherein the content of the organic solvent in the coating composition base is in the range of from 5 to 30 wt.-%.

5. Method according to one of the preceding claims, wherein the coating composition consists of
| | |
|---|---|
| 50 to 90 wt.-% | coating composition base |
| 8 to 40 wt.-% | coloring component |
| 1 to 10 wt.-% | secondary ingredients. |

6. Method according to one of the preceding claims, wherein the coating composition base comprises as the secondary ingredients an anti-cratering agent, a wetting agent, a leveling agent, a crack-bridging filler, a rheology modifying agent, an anti-settling agent and a dispersing agent or mixtures thereof.

7. Method according to one of the preceding claims, wherein applying the coating composition is effected by spraying the coating composition onto the surface of the transparent substrate.

8. Method according to one of the preceding claims, wherein prior to applying the coating composition onto the surface of the transparent substrate, said transparent substrate is preheated at a temperature in the range of from 60° to 100° C.

9. Method according to one of the preceding claims, wherein after applying the coating composition onto the surface of the transparent substrate, there is a desolvatation step at a temperature in the range of from 70° to 90° C for 3 to 10 minutes and/or there is a curing step at a temperature in the range of from 150° to 250° C for 30 to 90 minutes.

10. Method according to one of the preceding claims, wherein the substrate is made of glass or plastic.

11. Method according to one of the preceding claims, wherein the surface of the substrate is the inner surface of a transparent cosmetic product container.

12. Method according to one of the preceding claims, wherein the surface of the substrate is the inner surface of a transparent cosmetic product container for hydroalcoholic or alcoholic liquid cosmetic products.

13. Coating layer on a substrate, wherein said coating layer is prepared according to the method of one of the previous claims.

14. Substrate coated with a coating prepared according to the method of one of the previous claims.

15. Kit of chemical components for forming a colored coating on the surface of a transparent substrate by a method according to one of the previous claims, wherein said kit comprises at least the following chemical components in separate containers:
a) a functionalized polyester polyol resin having a molecular weight in the range of from 3000 to 4000 Dalton and being functionalized via urethane bonds with alkoxy silane groups of the general formula -(CH₂)ₓ-Si(OR)₃, wherein x is an integer in the range of from 1 to 10, and wherein R is (substituted or unsubstituted, linear or branched) alkyl of C₁ through C₈,
b) an organoalkoxysilane of the general formula RₙSi(OR')₄₋ₙ, wherein n is either 0 or 1, and wherein R and R' are independently from each other selected from a methyl or ethyl group, and
c) an organic or inorganic acid.
